# EUROPEAN PATENT APPLICATION

(11) **EP 1 727 337 A1**
(43) Date of publication of application: **29.11.2006**
(21) Application number: 05011267.1
(22) Date of filing: 24.05.2005
(51) Int. Cl.: H04M 1/725

(54) **Instruction processing system of handheld electronic apparatus**

(71) Applicant: Primax Electronics Ltd, 114 Neihu, Taipei (TW)
(72) Inventor: Hsi, Chen-Ning, 114 Neihu, Taipei (TW)
(74) Representative: Paustian, Othmar

(57) **Abstract**

An instruction processing system includes a sensor, a recording device, a memory device and an instruction-executing device. The sensor is used for converting a user's contact action applied on the handheld electronic apparatus into an electronic signal. The recording device is used for converting the electronic signal into an electronic information and recording a relationship between the electronic information and a corresponding instruction. The memory device is used for storing the electronic information and the relationship between the electronic signal and the corresponding instruction. The instruction-executing device is used for executing the instruction.

## Description

### FIELD OF INVENTION

The present invention relates to an instruction processing system of a handheld electronic apparatus according to the preamble of claim 1, and more particularly to an instruction processing system for inputting an instruction in response to a user action on the handheld electronic apparatus. Furthermore, the present invention relates to an instruction encoding method according to the preamble of claim 4.

### BACKGROUND OF THE INVENTION

In modem society, handheld electronic apparatuses such as mobile phones become essential communication devices because they are portable and convenient.

In some circumstances, however, the mobile phone is not suitable to be hand-held. For example, in the case of driving while using the mobile phone, the user should simultaneously look at the mobile phone and dial the phone number to make a phone call.

In such manner, the likelihood of the traffic accident is increased because only one hand is available for driving, and the user should be distracted from his driving work to input/search the phone number and then depress the dial key.

For a purpose of increasing convenience, the mobile phone has some other extended uses such as a voice dialing function. For example, if a name of a receiver such as "Wang Ta-Ming" has been previously recorded and stored in the mobile phone, the mobile phone will dial the number of the receiver Wang Ta-Ming in a case that the user speaks "Wang Ta-Ming" toward the mobile phone.

Such a voice dialing function is not satisfactory due to some drawbacks. For example, before recording an user's voice , a lot of practices are necessary for the user to have the recording system learn the user's voice characteristics so that the phone can successfully recognize the voice of the same user later. As known, the characteristics of the newly inputted voice should be substantially the same as that of the previously recorded voice to assure a successful input, and thus a lot of practices are necessary to input voice into the phone recording system.

In addition, when the mobile phone is used in a noisy circumstance, the input voice of the user fails to be desirably inputted into the recording system, because too much noise sound is also inputted into the recording system.

Furthermore, an additional speech-processing chip is required for implementing many mathematic computations so as to complete the voice recognization process.

A handheld electronic apparatus according to the preamble of claim 1 is known from WO 2004/082248 A. This known apparatus comprises one or more sensors for detection of a movement, rotation and/or acceleration of the apparatus to execute an apparatus function. A temperal sequence of movements - i.e. the respective movement of the apparatus is carried out several times by the user - is designated as a movement pattern and is used to take certain deviations of movements into consideration which are intended to be the same.

### SUMMARY OF THE INVENTION

The object of the present invention is to improve the user-friendliness of generic handheld electronic apparatuses.

According to the invention this object is achieved by the entirety of the features of claims 1 and 4, respectively.

In accordance with an aspect of the present invention, there is provided an instruction processing system of a handheld electronic apparatus. The instruction processing system comprises a sensing means, a conversion and encoding means, a memory means and an instruction-executing means. The sensing means is used for converting the user tapping, in the following also referred to as user action, applied on the handheld electronic apparatus into an electronic signal. The conversion and encoding means is used for converting the electronic signal in an electronic data information, in the following also referred to as electronic information, and recording a relationship between the electronic information and a corresponding instruction. The memory means is used for storing the electronic information and the relationship between the electronic information and the corresponding instruction. The instruction-executing means is used for executing the instruction.

In an embodiment, the electronic information includes the time period of each tapping, the number of times of the tapping and the interval between two consecutive tappings.

In an embodiment, the handheld electronic apparatus is a mobile phone, and the instruction includes dialing a phone number of a receiver or activating a presetting function of the handheld electronic apparatus.

In accordance with another aspect of the present invention, there is provided a mobile phone using the instruction processing system of a handheld electronic apparatus according to the present invention.

In accordance with another aspect of the present invention, there is provided an instruction encoding method of a mobile phone. The instruction encoding method comprising steps of recording an instruction code which is generated in response to a user's contact action applied on the mobile phone, and recording an instruction corresponding to the instruction code.

In accordance with another aspect of the present invention, the instruction encoding method further comprises steps of sensing a user's contact action applied on the mobile phone, and dialing a phone number of a receiver according to the contact action.

The above objects and advantages of the present invention will become more readily apparent to those ordinarily skilled in the art after reviewing the following detailed description and accompanying drawings, in which:

### BRIEF DESCRIPTION OF THE DRAWINGS

Fig. 1 is a block diagram of an instruction processing system of a handheld electronic apparatus according to a preferred embodiment of the present invention;
Fig. 2 is a flowchart for operating the instruction processing system of the present invention in the instruction-recording mode; and
Fig. 3 is a flowchart for operating the instruction processing system of the present invention in the instruction-executing mode.

### DETAILED DESCRIPTION OF THE PREFERRED EMBODIMENT

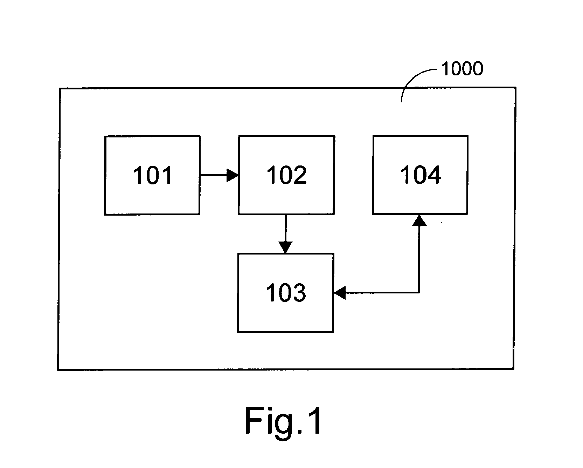

Referring to Fig. 1, a block diagram of an instruction processing system for use in a handheld electronic apparatus according to a preferred embodiment of the present invention is shown. In the embodiment of Fig. 1, the instruction processing system of a handheld electronic apparatus is installed within a mobile phone 1000. The instruction processing system of a handheld electronic apparatus comprises a sensing means 101, a conversion and encoding means 102, a memory means 103 and an instruction-executing means 104. The method of using the instruction processing system of the present invention to dial a phone number will be described as follows in more details.

The instruction processing system of the present invention is operated in accordance with two operating modes. The first operating mode is an instruction-recording mode. Whereas, the second operating mode is an instruction-executing mode.

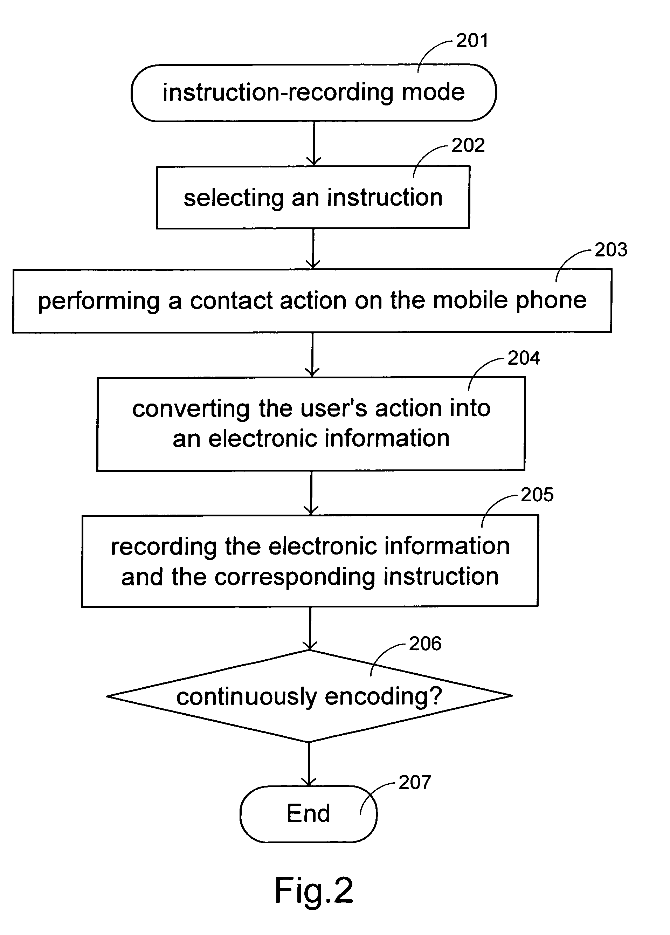

The user's actions and the instructions corresponding to these actions in the instruction-recording mode will be illustrated with reference to a flowchart of Fig. 2.

In step 201, the instruction processing system enters the instruction-recording mode.

In step 202, an instruction is selected to record.

The instruction described herein includes dialing the phone number of the user's wife (or husband), sons, commissioners or other persons that are often communicated with the user. In addition, the instruction may include certain control functions such as powering on or powering off the mobile phone.

In step 203, the user performs a contact action on the mobile phone.

The contact action includes tapping on the mobile phone. The tapping is an encoding operation such that the user can perform the tapping action according to the user's habits.

The names of the receivers may be encoded according to the pronunciation rhythm of an onomastic directory in a phone book. As known, the word "Mary" is usually pronounced as "ma-ry" in a short and rapid way. Under this circumstance, the action of dialing to the receiver Mary is implemented by successively performing two tapping actions in the same interval. In addition, the user may successively perform three tapping actions within two seconds to represent the instruction of powering on the mobile phone.

The instructions may be inputted in response to a user's touching on the phone.

Of course, the existing encoding system of the mobile phone, for example Morse codes, can be used to be the user's encoding rules.

In step 204, the user's action sensed by the sensing means 101 will be converted into an electronic signal.

The tapping action sensed by the sensing means 101 will be converted into an electronic signal.

In step 205, the electronic information generated from the sensing means and the corresponding instructions are recorded.

The electronic signal relating to the tapping action is converted into recordable electronic information by the conversion and encoding means 102 and stored in the memory means 103. The information includes the number of times of the tapping actions, the time period of each tapping action, the interval between two consecutive tapping actions or the number of times of the tapping actions during a fixed time period.

The electronic information stored in the memory device 103 may be obtained from a look-up table as follows:

**Look-up table of action information and corresponding instruction**

| Action information | Instruction |
|---|---|
| [2,-1,2] | Dial to MARY |
| [1,-1,3] | Dial to John |
| .... | ... |

The term [2,-1,2] used herein indicates the actions of tapping twice, intermitting for 1 second and then tapping twice. Similarly, the term [1,-1,3] used herein indicates the actions of tapping once, intermitting for 1 second and then tapping three times.

It is noted that, however, those skilled in the art will readily observe that numerous modifications and alterations of the tapping, shaking, touching or rotating action may be made while retaining the teachings of the invention. Accordingly, the above disclosure should be limited only by the bounds of the following claims.

In step 206, the user can determine whether next encoding operation is continuously performed?

After the first encoding operation is completed, if the next encoding operation is intended to perform, the process can be returned to the step 202.

In step 207, the above procedures are ended.

If the user is not intended to continue the encoding operation, the instruction-recording mode can be terminated.

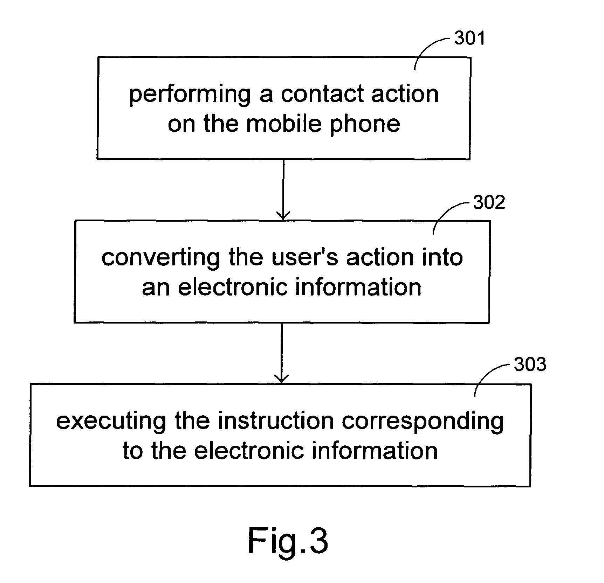

The instruction-executing mode will be illustrated with reference to a flowchart of Fig. 3.

In step 301, the user performs a contact action of the mobile phone.

In step 302, in response to the user's action sensed by the sensor 101, the electronic information relating to the user's action is generated and stored in the conversion and encoding means 102.

In step 303, the instruction-executing means 104 executes the instruction according to the look-up table of the user's action and the instruction stored in the memory device 103.

For example, if the function of dialing to the receiver Mary in the instruction-recording mode is indicated by successively performing two tapping actions in the same interval, when the user successively performs two tapping actions near the mobile phone, the instruction-executing device 104 will directly dial to the receiver Mary.

By the way, the process in the instruction-executing mode further comprises an confirmation step before the step 303. For example, if a sound "Mary" outputted from the mobile phone is checked to be valid, an confirmation action indicating "yes" may be done.

In contrast, if the selective receiver is not valid, an invalidated confirmation action indicating "no" may be done, thereby stop the wrong dialing operation. The information associated with the confirmation actions described herein may be inputted by the user or preset from the communication system of the mobile phone.

From the above description, the instruction processing system is a personalized and convenient method of inputting instructions. Since the instructions are encoded by touching the mobile phone according to the user's habit without using eyes to view the mobile phone, the instruction processing system is feasible when the user is driving or in a dark place. In addition, the instruction processing system is also helpful to those handicapped in vision in order to execute the instructions.

In the above embodiments, the procedures of recording and executing the instructions are implemented by software program without using the costly voice recognization IC, which is widely used for voice inputting system, and thus the instruction processing system of the present invention is cost effective.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A handheld electronic apparatus comprising an instruction processing system , characteristic in that of the instruction processing system comprising:
a sensor for converting a user's contact action applied on said handheld electronic apparatus into an electronic signal;
a recording device for converting said electronic signal into an electronic information and recording a relationship between said electronic information and a corresponding instruction;
a memory device for storing said electronic information and said relationship between said electronic signal and said corresponding instruction; and an instruction-executing device for executing said instruction.

2. The handheld electronic apparatus according to claim 1 wherein said contact action is tapping.

3. The handheld electronic apparatus according to claim 2 wherein said electronic information includes the time period of each tapping, the number of times of said tapping and the interval between two consecutive tapping.

4. The handheld electronic apparatus according to claim 1 wherein said contact action is shaking or rotating.

5. The handheld electronic apparatus according to claim 4 wherein said sensor includes at least a gradienter.

6. The handheld electronic apparatus according to claim 5 wherein said electronic information includes the direction of shaking or rotating said handheld electronic apparatus and the number of times of said shaking .

7. The handheld electronic apparatus according to claim 1 wherein said contact action is touching.

8. The handheld electronic apparatus according to claim 7 wherein said sensor is a touch screen.

9. The handheld electronic apparatus according to claim 1 wherein said handheld electronic apparatus is a mobile phone, and said instruction includes dialing a phone number and activating a presetting function of said handheld electronic apparatus.

10. An instruction inputting method of a mobile phone, comprising steps of:
recording an instruction code which is generated in response to a user's contact action applied on said mobile phone; and
recording an instruction corresponding to said instruction code.

11. A dialing method of a mobile phone, comprising steps of:
sensing a user's contact action applied on said mobile phone; and
dialing a phone number according to said contact action.

## Amended claims

### Amended claims in accordance with Rule 86(2) EPC.

**1.** A handheld electronic apparatus (1000) comprising an instruction processing system, the instruction processing system comprising:
a sensing means (101) for converting a user action applied on said handheld electronic apparatus into an electronic signal;
a conversion and encoding means (102) for converting said electronic signal into an electronic data information and recording a relationship between said electronic data information and a corresponding instruction;
a memory means (103) for storing said electronic data information and said relationship between said electronic data information and said corresponding instruction; and
an instruction-executing means (104) for executing said instruction;
**characterized in that** said user action is tapping.

**2.** The handheld electronic apparatus (1000) according to claim 1 wherein said electronic data information includes the time period of each tapping, the number of times of said tapping and the interval between two consecutive tapping.

**3.** The handheld electronic apparatus (1000) according to claim 1 or 2 wherein said handheld electronic apparatus (1000) is a mobile phone, and said instruction includes dialing a phone number or activating a presetting function of said handheld electronic apparatus (1000).

**4.** An instruction encoding method of a mobile phone (1000), comprising steps of:
recording (202, 203, 204) an instruction code which is generated in response to a user action (203) applied on said mobile phone (1000); and
recording (205) an instruction corresponding to said instruction code;
**characterized in that** said user action (203) is tapping.

**5.** An instruction encoding method according to claim 4, further comprising steps of:
sensing (302) a user tapping (301) applied on said mobile phone (1000); and
dialing (303) a phone number according to said user tapping.
